(19) Europäisches Patentamt
European Patent Office
Office européen des brevets

(11) Veröffentlichungsnummer: **0 140 323**
**B1**

(12) # EUROPÄISCHE PATENTSCHRIFT

(45) Veröffentlichungstag der Patentschrift: **03.06.87**

(51) Int. Cl.⁴: **C 09 D 3/64**

(21) Anmeldenummer: **84112710.3**

(22) Anmeldetag: **22.10.84**

(54) **Wässrige Dispersionen Vernetzer-haltiger Lackbindemittel auf Polyesterbasis.**

(30) Priorität: **02.11.83 DE 3339580**

(43) Veröffentlichungstag der Anmeldung:
**08.05.85 Patentblatt 85/19**

(45) Bekanntmachung des Hinweises auf die Patenterteilung:
**03.06.87 Patentblatt 87/23**

(84) Benannte Vertragsstaaten:
**AT BE CH DE FR GB IT LI NL SE**

(56) Entgegenhaltungen:
**AT - B - 358 687**
**DE - A - 3 108 861**
**US - A - 4 410 668**

(73) Patentinhaber: **BAYER AG, Konzernverwaltung RP Patentabteilung, D-5090 Leverkusen 1 Bayerwerk (DE)**

(72) Erfinder: **Stahl, Hans-Georg, Dr., Theodor-Wobnitz-Strasse 22, D-2900 Oldenburg (DE)**
Erfinder: **Schwindt, Jürgen, Dr., Schubertstrasse 46, D-5090 Leverkusen 1 (DE)**
Erfinder: **Nachtkamp, Klaus, Dr., Leuchterstrasse 112, D-5000 Köln 80 (DE)**
Erfinder: **Hoehne, Klaus, Dr., Elisabeth-Langgässer-Strasse 39, D-5090 Leverkusen 1 (DE)**

**EP 0 140 323 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft wässrige Dispersionen auf Polyester- bzw. Alkydharzbasis für lufttrocknende Lackbindemittel und Einbrennlackbindemittel, die als Vernetzer eine Kombination wasserlöslicher Aminoplastharze und verkappter Polyisocyanate enthalten.

Unter «wässrigen Dispersionen» werden im folgenden heterogene Systeme verstanden, die undurchsichtig sind und bei denen die organische Harzphase als Teilchen einer mittleren Grösse von 50-3000 nm in Wasser verteilt ist. Unter den Begriff «wässrige Dispersionen» fallen im folgenden also nicht jene Alkydharz- bzw. Polyester-Lösungen, die durch neutralisierte Säuregruppen in wässriger Phase durchsichtige Lösungen bilden; derartige Harze besitzen in der Regel Säurezahlen über 40, werden in mit Wasser mischbaren organischen Lösungsmitteln vorgelöst und nach der Neutralisation mit Wasser zu homogenen, durchsichtigen Lösungen verdünnt.

Für den zunehmenden Einsatz wässriger Alkydharz- bzw. Polyesterdispersionen sprechen hauptsächlich zwei Gründe: Ersten besitzen sie den Vorteil, dass man auf die Verwendung organischer Lösungsmittel verzichtet kann, und zweitens neigen sie — anders als die aus organischer Lösung applizierten Überzugsmittel — kaum zum Ablaufen an senkrechten Flächen vgl. (F. Armitage, L.G. Trace, J. Oil and Colour Chemists Assoc. *1957*, S. 860).

Wässrige Dispersionen urethanmodifizierter Polyester und Alkydharze und ihre Verwendung als Bindemittel für lufttrocknende Lacke sowie für Einbrennlacke sind bekannt (DE-OS 2 837 552, 2 928 552). Die daraus hergestellten Überzüge zeichnen sich durch Härte und Elastizität, gute Lösungsmittelbeständigkeit, hohen Glanz und gute Haftung aus. Allerdings genügen bei sehr hoher Pigmentierung, d.h. Pigmentgehalten von über 80 Gew.-%, vorzugsweise von über 100 Gew.-%, bezogen auf organischen Festkörpergehalt, aus diesen Lacken hergestellte Überzüge mitunter allzu hohen Anforderungen nicht.

Überraschenderweise wurde nun gefunden, dass eine speziell ausgewählte Polyester/Vernetzer-Kombination diesen an sich hochwertigen Bindemitteln noch überlegen ist.

Gegenstand der Erfindung sind wässrige Dispersionen mit einem Gehalt an organischem Festkörper von 30 bis 80 Gew.-%, bezogen auf wässrige Dispersion, auf Basis von

I. 60 bis 90 Gew.-%, bezogen auf die Summe von I+II, ölfreiem Polyester oder Alkydharz,

II. 10 bis 40 Gew.-%, bezogen auf die Summe I+II, Vernetzer,

III. 0 bis 1,5 Gew.-%, bezogen auf die Summe I+II, Emulgator und gegebenenfalls

IV. üblichen Mengen Hilfsmittel und Zusatzstoffe,

dadurch gekennzeichnet, dass die ölfreien Polyester und Alkydharze I

eine mittlere Funktionalität von 2,5 bis 10, vorzugsweise von 3 bis 8,

einen mittleren Kondensationsgrad von 10 bis 25, vorzugsweise von 14 bis 22,

einen mittleren Urethangruppengehalt von 3 bis 6 pro Molekül besitzen und

Reste einkondensierter 2,2-Di(hydroxymethyl)-carbonsäuren entsprechend einer Säurezahl von 15 bis 30 enthalten, die zu mindestens 80% neutralisiert sind,

dass der Vernetzer II aus

a) wasserlöslichem Aminoplastharz und

b) blockiertem Polyisocyanat besteht,

wobei das Gewichtsverhältnis a/b 0,33 bis 1,0 beträgt, und

dass der Gehalt an organischem Lösungsmittel unter 8 Gew.-%, bezogen auf die Dispersion, liegt.

Im folgenden werden unter «Polyestern» fettsäure- und ölfreie Polyester, unter «Alkydharzen» fettsäure- oder ölmodifizierte Polyester verstanden.

Unter Alkydharzen und Polyestern versteht man durch Polykondensation nach bekannten Verfahren aus Alkoholen und Carbonsäuren hergestellte Polykondensate der Art, wie sie z.B. in Römpps's Chemielexikon, Bd 1, S. 202, Frankh'sche Verlagsbuchhandlung, Stuttgart, 1966 definiert oder bei D.H. Solomon, The Chemistry of Organic Filmformers, S. 75-101, John Wiley & Sons Inc., New York, 1967, beschrieben sind.

Für die Synthese der Alkydharze bzw. Polyester I bevorzugte Alkohole sind aliphatische, cycloaliphatische und araliphatische Alkohole mit 1-6, vorzugsweise 1-4, OH-Gruppen und 1-24 C-Atomen pro Molekül, z.B. Glykole wie Ethylenglykol, Propylenglykol, Butandiole, Hexandiole; Etheralkohole wie Di- und Triethylenglykole; oxethylierte Bisphenole; perhydrierte Bisphenole; ferner Trimethylolethan, Trimethylolpropan, Glycerin, Pentaerythrit, Dipentaerythrit, Mannit und Sorbit; einwertige, kettenabbrechende Alkohole wie Propanol, Butanol, Cyclohexanol und Benzylalkohol.

Für die Synthese der Alkydharze bzw. Polyester I bevorzugte Säurekomponenten sind aliphatische gesättigte oder ungesättigte, cycloaliphatische gesättigte oder ungesättigte und aromatische mehrbasische Carbonsäuren, vorzugsweise Di-, Tri- und Tetracarbonsäuren, mit 4-12 C-Atomen pro Molekül oder deren versterungsfähige Derivate (z.B. Anhydride oder Ester), z.B. Phthalsäureanhydrid, Isophthalsäure, Terephthalsäure, Tetrahydro- und Hexahydrophthalsäureanhydrid, Trimellitsäureanhydrid, Pyromellitsäureanhydrid, Fumarsäure, Maleinsäureanhydrid, Adipinsäure und Bernsteinsäureanhydrid, ferner halogenierte Säuren, wie Chlorphthalsäuren und Hexachlorendomethylentetrahydrophthalsäure.

Für die Herstellung der Polyester bzw. Alkydharze I bevorzugte Monocarbonsäuren sind aliphatische, cycloaliphatische gesättigte und ungesättigte und aromatische Monocarbonsäuren mit 6-24 C-Atomen pro Molekül wie Benzoesäure, Butylbenzoesäure, Tolylsäure, Hexahydrobenzoesäure, Abietinsäure, Milchsäure sowie Fettsäuren und Fettsäureester wie Leinöl, Sojaöl, Holzöl, Saffloröl, Ricinusöl, Ricinenöl, Baumwollsaatöl, Erdnussöl, Tallölfettsäure, Leinölfettsäure, Sojaöl-, Holzöl-, Saffloröl- und Ricinenölfettsäure und aus natürlichen, ungesättigten Ölen oder Fettsäuren durch Konjugierung oder Isomerisierung gewonnene Produkte; geeignete gesättigte Fettsäuren sind beispielsweise Cocosfettsäuren und α-Ethylhexansäure.

Die 2,2-Di(hydroxymethyl)-carbonsäuren enthalten vorzugsweise 5 bis 12 C-Atomen, wobei die Carboxylgruppe an einem tertiären C-Atom sitzt. Besonders bevorzugt sind 2,2-Di(hydroxymethyl)-buttersäure und insbesondere 2,2-Di(hydroxymethyl)-propionsäure.

Die Herstellung der urethanisierten Polyester und Alkydharze I kann beispielsweise so erfolgen, dass man ein lineares oder verzweigtes Vorkondensat einer Säurezahl unter 10 auf der Basis Polycarbonsäure, Polyol und gegebenenfalls Fettsäure(ester) mit der 2,2-Di(hydroxymethyl)-carbonsäure, dem Polyisocyanat und gegebenenfalls dem mehr als 2-wertigen Polyol in solchen Mengen, dass das Molverhältnis 2,2-Di(hydroxymethyl)-carbonsäure/Polyisocyanat 1:1 bis 1:2 und das molare Verhältnis Isocyanatgruppen/OH-Gruppen sämtlicher Komponenten weniger als 0,9:1 betragen, bei Temperaturen, bei denen die Carboxylgruppen der 2,2-Di(hydroxymethyl)-carbonsäuren nicht reagieren, d.h. bei 60 bis 135, vorzugsweise bei 80 bis 120°C, umsetzt, bis Kondensationsgrad, Urethan- und Carboxylgruppengehalt (wie oben definiert) erreicht sind.

Unter Kondensationsgrad im Sinne der Erfindung ist die Summe der einkondensierten Einheiten von Säure-, Alkohol- und Isocyanatkomponenten pro Molekül zu verstehen.

Unter Funktionalität im Sinne der Erfindung versteht man die Summe von Hydroxyl- und Carboxylgruppen pro Molekül. Sie kann durch Bezug des Titrationsergebnisses auf das als Zahlenmittel bestimmte Molekulargewicht errechnet werden.

Bevorzugte Isocyanate für die Einführung der Urethangruppen in die Polyester bzw. Alkydharze I sind Polyisocyanate mit 4 bis 25, vorzugsweise 4 bis 16, C-Atomen und 2 bis 4, vorzugsweise 2, Isocyanatgruppen pro Molekül, also aliphatische, cycloaliphatische, araliphatische und aromatische Diisocyanate, wie sie beispielsweise in «Methoden der Organischen Chemie» (Houben-Weyl), Bd. 14/2, 4. Aufl., Georg Thieme Verlag, Stuttgart 1963, S. 61-70, und von W. Siefken, Liebigs Ann. Chem. *562*, 75-136, beschrieben werden, z.B. 1,2-Ethylendiisocyanat, 1,4-Tetramethylendiisocyanat, 1,6-Hexamethylendiisocyanat, 2,2,4- bzw. 2,4,4-Trimethyl-1,6-hexamethylendiisocyanat, 1,12-Dodecandiisocyanat, ω,ω'-Diisocyanatodipropylether, Cyclobutan-1,3-diisocyanat, Cyclohexan-1,3- und -1,4-diisocyanat, 2,2- und 2,6-Diisocyanato-1-methylcyclohexan, 3-Isocyanatomethyl-3,5,5-trimethylcyclohexylisocyanat («Isophorondiisocyanat»), 2,5- und 3,5-Bis-(isocynatomethyl)-8-methyl-1,4-methano-decahydronaphthalin, 1,5-, 2,5-, 1,6- und 2,6-Bis(isocyanatomethyl)-4,7-methano-hexahydroindan, 1,5-, 2,5-, 1,6- und 2,6-Bis-(isocyanato)-4,7-methano-hexahydroindan, Dicyclohexyl-2,4'- und -4,4'-diisocyanat, 2,4- und 2,6-Hexahydrotoluylendiisocyanat, Perhydro-2,4'-und -4,4'-diphenylmethandiisocyanat, ω,ω'-Diisocyanato-1,4-diethylbenzol, 1,3- und 1,4-Phenylendiisocyanat, 4,4'-Diisocyanato-diphenyl, 4,4'-Diisocyanato-3,3'-dichlordiphenyl, 4,4'-Diisocyanato-3,3'-dimethoxy-diphenyl, 4,4'-Diisocyanato-3,3'-dimethyl-diphenyl, 4,4'-Diisocyanato-3,3'-diphenyl-diphenyl, 2,4'- und 4,4'-Diisocyanato-diphenylmethan, Naphthylen-1,5-diisocyanat, Toluylendiisocyanate wie 2,4- bzw. 2,6-Toluylen-diisocyanat, N,N'-(4,4'-Dimethyl-3,3'-diisocyanatodiphenyl)-uretdion, m-Xylylen-diisocyanat, aber auch die Triisocyanate wie 2,4,4'-Triisocyanato-diphenylether, 4,4',4''-Triisocyanatotriphenylmethan, Tris(4-isocyanatophenyl)-thiophosphat, sowie beliebige Gemische dieser Isomeren.

Besonders bevorzugt werden in der Regel die technisch leicht zugänglichen aliphatischen und cycloaliphatischen Polyisocyanate, insbesondere Hexamethylendiisocyanat, 4,4'-Di(isocyanatocyclohexyl)-methan und 3-Isocyanatomethyl-3,5,5-trimethylcyclohexylisocyanat.

Bevorzugte Neutralisationsmittel für die Polyester und Alkydharze I sind Alkalihydroxide, Ammoniak, primäre, sekundäre und tertiäre Amine, wie z.B. Ethylamin, Di- und Triethylamin, Mono-, Di- und Triethanolamin, Dimethylethanolamin, Methyldiethanolamin, Dimethylaminomethylpropanol.

Das als Zahlenmittel bestimmte Molekulargewicht der Polyester und Alkydharze I beträgt 2000 - 10000 (bis zu Molekulargewichten von 5000 dampfdruckosmometrisch bestimmt in Dioxan und Aceton, wobei bei differienden Werten der niedrigere Wert als korrekt angesehen wird; bei Molekulargewichten über 5000 membranosmometrisch bestimmt in Aceton).

Als Aminoplastharze IIa sind vorzugsweise Melamin-Formaldehyd- oder Harnstoff-Formaldehyd-Kondensationsprodukte anzusehen. Melaminharze sind alle herkömmlichen nicht veretherten oder mit gesättigten Monoalkoholen mit 1 bis 4 C-Atomen veretherten Melamin-Formaldehyd-Kondensate, wie sie z.B. in der FR-PS 943 411 oder bei D.H. Solomon, The Chemistry of Organic Filmformers, 235-240, John Wiley & Sons, Inc., New York, 1967, beschrieben sind. Die Melaminharze können jedoch auch ganz oder teilweise durch andere vernetztende Aminoplasten, wie sie z.B. in «Methoden der Organischen Chemie» (Houben-Weyl), Bd. 14/2, Teil 2, 4. Aufl., Georg Thieme Verlag, Stuttgart 1963, 319 ff. beschrieben sind, ersetzt werden.

Bevorzugte Polyisocyanate für die Herstellung der blockierten Polyisocyanate IIb sind die oben für die Urethanisierung der Polyester- und Alkydharzvorkondensate beschriebenen Polyisocyanate; weitere bevorzugte Polyisocyanate für die Herstellung der Komponente IIb sind beispielsweise Tris(isocyanatohexyl)-biuret und gegebenenfalls seine höheren Homologen enthaltende Biuretisocyanate sowie Umsetzungsprodukte von Polyethylenglykolen mit 4 bis 10 Ethylenoxideinheiten und der 2-molaren Menge an aliphatischen Diisocyanaten (wie sie oben beschrieben sind).

Geeignete Blockierungsmittel für die Herstellung der blockierten Polyisocyanate sind in Houben-Weyl, loc. cit., S. 61-70, beschrieben. Sie umfassen vorzugsweise Verbindungen, die sich bei Temperaturen zwischen 120 und 220°C wieder abspalten lassen, z.B. primäre Alkohole wie Methanol, Ethanol, Cyclohexanol, Phenole wie unsubstituiertes Phenol selbst, Lactame wie ε-Caprolactam, Laurinlactam, β-Diketone wie Acetessigester, Malonester, Acetylaceton, Imide wie Phthalimid, Oxime wie Butanonoxim, tertiäre aromatische Amine wie Imidazol, Halogenwasserstoffe wie Chlorwasserstoff, und Cyanwasserstoff.

Die zur Dispergierung der Bindemittel gegebenenfalls benötigten Emulgatoren III können ionischer oder nichtionischer Art oder Mischtypen sein, wie sie z.B. in «Methoden der Organischen Chemie» (Houben-Weyl), Bd. 14/1, Teil 1, 4. Aufl., Georg Thieme Verlag, Stuttgart 1961, S. 190-208, beschrieben sind.

Bevorzugte ionische Emulgatoren sind $C_{12-18}$-Alkyl-sulfate und -sulfonate. Bevorzugte nichtionische Emulgatoren sind Verbindungen der Formel

$$R^1 - O\text{-}R^3{}_mH;\ R^2\ \text{-CO-O-}R^4{}_nH$$

worin $R_1$ und $R_2$ eine aliphatische, cycloaliphatische, araliphatische oder aromatische Gruppe mit 7-25 C-Atomen, $R^3$ und $R^4$ $C_2H_4O$, $C_3H_6O$ oder $C_4H_8O$ und m und n ganze Zahlen von 3 bis 100 bedeuten.

Bevorzugte Mischtyp-Emulgatoren III lassen sich durch Sulfatierung der Hydroxylgruppen der nichtionischen Emulgatoren gewinnen.

Ferner sind auch Oligomere und Polymere als Emulgatoren oder emulsionsstabilisierende Substanzen III verwendbar. Darunter fallen z.B. Schutzkolloide wie Casein, teilweise und völlig verseiftes Polyvinylacetat, Polymerisate und Copolymerisate aus Acrylsäure oder Methacrylsäure, wobei die Carboxylgruppen ganz oder teilweise neutralisiert sein können.

Zu den Hilfsmitteln und Zusatzstoffen IV zählen Farbstoffe, Pigmente, Verlaufmittel, Vernetzungskatalysatoren u. dgl.

Bevorzugte Lösungsmittel, die das Dispergieren erleichtern, sind in der Lacktechnologie übliche wassermischbare Lösungsmittel, z.B. einwertige Alkohole wie Ethanol, Isopropanol, Glykolmonoalkylether wie Glykolmonobutylether, Ethylglycolacetat, N-Methylpyrrolidon, Aceton, Dioxan.

Die erfindungsgemässen wässrigen Dispersionen werden vorzugsweise nach dem Schmelzdispergierverfahren hergestellt, wobei das blockierte Polyisocyanat vor dem Dispergieren in der Schmelze des Polyesters bzw. Alkydharzes I gelöst und mitdispergiert werden kann.

Die erfindungsgemässen Dispersionen können durch übliche Techniken, z.B. durch Tauchen, Spritzen, Giessen, auf die zu lackierenden Materialien aufgetragen werden. Die dazu notwendige Viskosität stellt man in der Regel durch Zugabe von Wasser ein.

Die aufgetragenen Lackfilme können bei Temperaturen von 120 bis 200°C gehärter werden, wobei die Härtungstemperatur natürlich über der Deblockierungstemperatur der Komponente IIb liegen muss. Aus wirtschaftlichen Gründen wählt man in der Regel Härtungstemperaturen, die nur 5 bis 10°C über der Deblockierungstemperatur liegen.

Die erfindungsgemässen Dispersionen eignen sich besonders für die Herstellung von Überzügen, die mechanischen Einwirkungen ausgesetzt sind (z.B. untere Karosserieteile von Kraftfahrzeugen, Karosserieteile von Nutzfahrzeugen, wie Lastwagen, und von Maschinen).

Die aus den erfindungsgemässen Dispersionen hergestellten Überzüge haften ausgezeichnet auf anderen Überzügen, wie Grundierungen aus wässrigen Überzugsmitteln, insbesondere elektrophoretisch abgeschiedenen Grundierungen.

*Beispiele*

Als *Emulgator* wurde ein auf p-Nonylphenol gestartetes Polyethylenoxid mit einem mittleren Gehalt an 20 Ethylenoxideinheiten pro Molekül verwendet.

Als *blockiertes Polyisocyanat* wurden ein mit Butanonoxim blockiertes Tris(isocyanatohexyl)-biuret und höhere Homologe enthaltendes Biuretisocyanat eingesetzt.

Als *Melaminharz* wurde ein wasserlösliches Hexamethoxymelamin eingesetzt.

*Beispiel 1*

104 g Neopentylglykol und 102,67 g Hexahydrophthalsäureanhydrid wurden bis zu einer Säurezahl von 3 verestert (Vorkondensat 1).

354 g Hexandiol-1,6 und 292 g Adipinsäure wurden bis zu einer Säurezahl von 3 verestert (Vorkondensat 2).

Zu 97,35 g Vorkondensat 1, 295,67 g Vorkondensat 2, 22,33 g Trimethylolpropan, 22,33 g Dimethylolpropionsäure, 82 g N-Methylpyrrolidon und 12,97 g Triethylamin tropfte man bei 80°C 144,1 g 4,4'-Diisocyanatocyclohexyl-urethan. Nach 3 Stunden Reaktionszeit bei 80°C gab man 8,1 g Emulgator und 163,62 g blockiertes Polyisocyanat zu und verdünnte mit 572 g Wasser auf einem Festkörpergehalt von 45 Gew.-%.

Die erhaltene Dispersion wurde unter Verwendung von 5,5 g Melaminharz zu einem Lack angerieben; Ergebnisse s. Tabelle.

*Beispiel 2*

280 g Sojaölfettsäure, 268 g Trimethylolpropan und 148 g Phthalsäureanhydrid wurden bis zu einer Säurezahl von 3 verestert (Vorkondensat 1).

560 g Sojaölfettsäure, 272 g Pentaerythrit und 148 g Phthalsäureanhydrid wurden bis zu einer Säurezahl von 3 verestert (Vorkondensat 2).

Zu 145,83 g Vorkondensat 1, 88,7 g Vorkondensat 2, 88,7 g N-Methylpyrrolidon, 17,3 g Dimethylpropionsäure und 13,09 g Triethylamin tropfte man bei 80°C 77,91 g Isophorondiisocyanat. Nach 3 Stunden Reaktionszeit bei 80°C löste man in der Harzschmelze 4,7 g Emulgator und 141,34 g blockiertes Polyisocyanat und verdünnte mit 623,16 g Wasser auf einen Festkörpergehalt von 40 Gew.-%.

Die erhaltene Dispersion wurde unter Verwendung von 47,1 g Melaminharz zu einem Lack angerieben; Ergebnisse s. Tabelle.

*Beispiele 3*

260 g Sojaölfettsäure, 126 g Pentaerythrit und 92 g Phthalsäureanhydrid wurden bis zu einer Säurezahl von 3 verestert (Vorkondensat 1).

277,5 g Hexandiol-1,6 und 229 g Adipinsäure wurden bis zu einer Säurezahl von 3 verestert (Vorkondensat 2).

Zu 59,62 g Vorkondensat 1, 145,4 g Vorkondensat 2, 38 g Ethylgklykolacetat, 17,38 g Dimethylolpropionsäure und 9,17 g Triethylamin tropfte man bei 80°C 57,6 g Isophorondiisocyanat. Nach 3 Stunden Reaktionszeit bei 80°C löste man in der Harzschmelze 3,6 g Emulgator und 84 g blockiertes Polyisocyanat und verdünnte mit 495,25 g Wasser auf einen Festkörpergehalt von 40 Gew.-%.

Die erhaltene Dispersion wurde unter Verwendung von 36,76 g Melaminharz zu einem Lack angerieben; Ergebnisse s. Tabelle.

TABELLE

| | Beispiel 1 | Beispiel 2 | Beispiel 3 |
|---|---|---|---|
| Pigment | 120% $TiO_2$ | 120% $TiO_2$ | 100% $TiO_2$ |
| Schichtdicke | 40 µm | 40 µm | 40 µm |
| Härtung | 30 Min/120°C | 30 Min/120°C | 30 Min/120°C |
| Verlauf | 0 | | 0 |
| Gitterschnitt | 0 | 0 | 0 |
| Gardner-Glanz (60°C) | 75 | 85 | 99 |
| Erichsentiefung | 6 mm | 5 mm | 5 mm |
| Pendelhärte | 126 sec | 100 sec | 115 sec |
| Schlagtiefung direkt (indirekt) | 20 (6) | 12 (2) | 20 (12) |
| konischer Dorn | 24% | 28% | 26% |
| Bleistifthärte | | HB | 2H |

**Patentansprüche**

1. Wässrige Dispersionen mit einem Gehalt an organischem Festkörper von 30 bis 80 Gew.-%, bezogen auf wässrige Dispersion, auf Basis von

I. 60 bis 90 Gew.-%, bezogen auf die Summe von I + II, ölfreiem Polyester oder Alkydharz,

II. 10 bis 40 Gew.-%, bezogen auf die Summe I + II, Vernetzer,

III. 0 bis 1,5 Gew.-%, bezogen auf die Summe I + II, Emulgator und gegebenenfalls

IV. üblichen Mengen Hilfsmittel und Zusatzstoffe,

dadurch gekennzeichnet, dass die ölfreien Polyester und Alkydharze I
eine mittlere Funktionalität von 2,5 bis 10,
einen mittleren Kondensationsgrad von 10 bis 25,
einen mittleren Urethangruppengehalt von 3 bis 6 pro Molekül besitzen und
Reste einkondensierter 2,2-Di(hydroxymethyl)-carbonsäuren entsprechend einer Säurezahl von 15 bis 30 enthalten, die zu mindestens 80% neutralisiert sind,
dass der Vernetzer II aus

a) wasserlöslichem Aminoplastharz und
b) blockiertem Polyisocyanat besteht,

wobei das Gewichtsverhältnis a/b 0,33 bis 1,0 beträgt, und
dass der Gehalt an organischem Lösungsmittel unter 8 Gew.-%, bezogen auf die Dispersion, liegt.

2. Dispersionen nach Anspruch 1, dadurch gekennzeichnet, dass die ölfreien Polyester und Alkydharze I eine mittlere Funktionalität von 3 bis 8 besitzen.

3. Dispersionen nach Ansprüchen 1 und 2, dadurch gekennzeichnet, dass die ölfreien Polyester und Alkydharze I einen mittleren Kondensationsgrad von 14 bis 22 besitzen.

**Claims**

1. Aqueous dispersions with a content of organic solids of 30 to 80% by weight, based on the aqueous dispersion, which are based on

I. 60 to 90% by weight, based on the sum of I + II, of oil-free polyester or alkyd resin,

II. 10 to 40% by weight, based on the sum of I + II, of crosslinking agent,

III. 0 to 1.5% by weight, based on the sum of I + II, of emulsifier and, if appropriate,

IV. customary amounts of auxiliaries and additives,

characterised in that the oil-free polyesters and alkyd resins I have
an average functionality of 2.5 to 10,
an average degree of condensation of 10 to 25,
and an average content of urethane groups of 3 to 6 per molecule
and contain radicals of cocondensed 2,2-di(hydroxymethyl)-carboxylic acids corresponding to an acid number of 15 to 30, at least 80% of which are neutralised,
in that the crosslinking agent II consists of

a) water-soluble aminoplast resin and
b) blocked polyisocyanate,

the weight ratio of a/b being 0.33 to 1.0, and in that the content of organic solvent is less than 8% by weight, based on the dispersion.

2. Dispersions according to Claim 1, characterised in that the oil-free polyesters and alkyd resins I have an average functionality of 3 to 8.

3. Dispersions according to Claims 1 and 2, characterised in that the oil-free polyesters and alkyd resins I have an average degree of condensation of 14 to 22.

**Revendications**

1. Dispersions aqueuses ayant une teneur en solides organiques de 30 à 80% en poids, par rapport à la dispersion aqueuse, à base de:

I. 60 à 90% en poids de polyester ou de résine alkydique sans huile, par rapport à la somme I + II.

II. 10 à 40% en poids d'agent réticulant, par rapport à la somme I + II.

III. 0 à 1,5% en poids d'émulsionnant, par rapport à la somme I + II et, eventuellement,

IV. des quantités habituelles d'agents auxiliaires et additifs,

caractérisées en ce que les polyesters et résines alkydiques sans huile I possèdent
une functionnalité moyenne de 2,5 à 10,
un degré moyen de condensation de 10 à 25,
une teneur moyenne en groupes uréthannes de 3 à 6 par molécule et contiennent des restes d'acides 2,2-di(hydroxyméthyl)-carboxyliques introduits dans la condensation conformément à un indice d'acide de 15 à 30, qui sont neutralisés à au moins 80%,
en ce que l'agent réticulant II consiste en

a) une résine aminoplaste soluble dans l'eau et
b) un polyisocyanate bloqué,

le rapport pondéral a/b étant de 0,33 à 1,0, et en ce que la teneur en solvant organique est inférieure à 8% en poids, par rapport à la dispersion.

2. Dispersions selon la revendication 1, caractérisées en ce que les polyesters et résines alkydiques sans huile I possèdent une fonctionnalité moyenne de 3 à 8.

3. Dispersions selon les revendications 1 et 2, caractérisées en ce que les polyesters et résines alkydiques sans huile I possèdent un degré moyen de condensation de 14 à 22.